# EUROPEAN PATENT SPECIFICATION

(11) **EP 2 623 888 B1**
(45) Date of publication and mention of the grant of the patent: **10.04.2019**
(21) Application number: 11828258.1
(22) Date of filing: 25.02.2011
(51) Int. Cl.: F25B 1/00

(54) **THERMAL STORAGE DEVICE AND AIR CONDITIONER PROVIDED WITH THERMAL STORAGE DEVICE**
WÄRMESPEICHERVORRICHTUNG UND MIT DIESER WÄRMESPEICHERVORRICHTUNG AUSGESTATTETE KLIMAANLAGE
DISPOSITIF D'ACCUMULATION THERMIQUE ET CLIMATISEUR COMPORTANT LE DISPOSITIF D'ACCUMULATION THERMIQUE

(30) Priority: 01.10.2010 JP 2010223756
(43) Date of publication of application: 07.08.2013
(73) Proprietor: Panasonic Corporation, Osaka 571-8501 (JP)
(72) Inventor: SUGIO, Takashi, Chuo-ku, Osaka-shi Osaka 540-6207 (JP); KURISUTANI, Hiroharu, Chuo-ku, Osaka-shi Osaka 540-6207 (JP); IMASAKA, Toshiyuki, Chuo-ku, Osaka-shi Osaka 540-6207 (JP); KUBO, Tsugio, Chuo-ku, Osaka-shi Osaka 540-6207 (JP); YAMAMOTO, Noriaki, Chuo-ku, Osaka-shi Osaka 540-6207 (JP)
(74) Representative: Eisenführ Speiser
(86) International application number: PCT/JP2011/001090
(87) International publication number: WO 2012/042688

(56) References cited:
- JP-A- 1 008 376
- JP-A- 3 160 242
- JP-A- H0 331 666
- JP-A- H04 257 673
- JP-U- H02 128 065

## Description

### Technical Field

The present invention relates to a heat storage device disposed around a compressor and accommodating a heat storage material that stores therein heat generated by the compressor and also to an air conditioner having the heat storage device.

### Background Art

A conventional heat pump air conditioner conducts defrosting during heating by switching a four-way valve from a heating cycle to a cooling cycle when frost has been formed on an outdoor heat exchanger. In this defrosting method, an indoor fan is at a stop, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Patent Document 1).

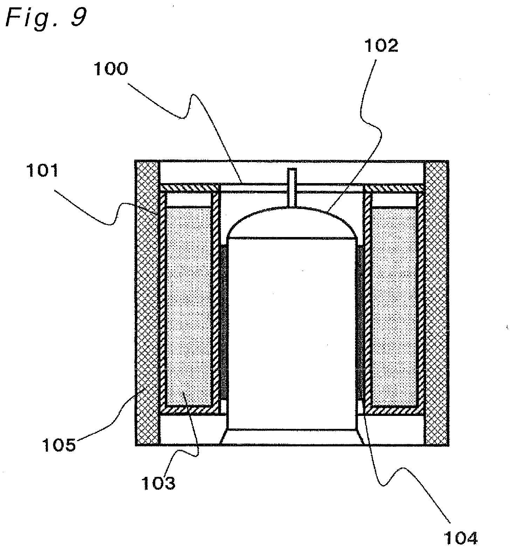

Fig. 9 is a vertical cross-sectional view of an example of a conventional heat storage device. In Fig. 9, a heat storage device 100 includes a heat storage tank 101 in the form of a container that is disposed around a compressor 102 so as to be held in contact with at least part of an outer surface thereof. A silicone filler 104 is filled in a gap between the compressor 102 and the heat storage tank 101, which is filled with a heat storage material 103 and covered with a heat insulating material 105. Document JP H02 128065U discloses a heat storage device disposed around a compressor to store heat generated by the compressor, the heat storage device comprising : a heat storage material that stores heat generated by the compressor; a heat storage tank that accommodates the heat storage material therein, the heat storage tank having a heat-transfer portion in contact with the compressor; and a contact member interposed between the heat-transfer portion and the compressor, the contact member having a hardness of 50 degrees or less in Asker C hardness.

### Patent Document(s)

• Patent Document 1: Japanese Patent No.1873598

### Summary of the Invention

### Problems to be solved by the Invention

As described above, in the conventional heat storage device 100 as shown in Fig. 9, the heat storage tank 101 is disposed so as to be held in contact with the outer surface of the compressor 102, but it is really difficult to manufacture the heat storage device 100 without creating any gap between the heat storage device 100 and the compressor 102. Even if a silicone filler 104 is filled in this gap as in the conventional heat storage device referred to above, the gap cannot be sufficiently filled if it is large or a contact area between the compressor 102 and the heat storage tank 101 is large. In most cases, the gap is created over a wide area between the compressor 102 and the heat storage tank 101. The creation of such a gap means the presence of an air layer that acts as a heat insulating material, thus posing a problem that heat generated by the compressor 102 cannot be efficiently stored in the heat storage material 103.

The present invention has been developed to solve the problems inherent in the prior art and is intended to provide a heat storage device capable of efficiently storing heat generated by the compressor in the heat storage material and also to provide an air conditioner employing such a heat storage device therein.

### Means to Solve the Problems

In accomplishing the above objective, the present invention is directed to a heat storage device disposed around a compressor to store heat generated by the compressor, having the features of claim 1.

### Effects of the Invention

According to the present invention, because the contact member has a sufficient softness and thickness and is located at a location confronting the compressor, a pressing force applied to the contact member to fix the heat storage tank causes deformation of the contact member to reduce a small gap between the compressor and the heat storage tank, thereby making it possible to sufficiently increase an area of contact. Accordingly, an air layer acting as a heat insulating material can be reduced and heat generated by the compressor can be efficiently transferred to and stored in the heat storage material.

### Brief Description of the Drawings

Fig. 1 is a piping diagram of an air conditioner having a heat storage device according to the present invention.
Fig. 2 is a piping diagram of the air conditioner of Fig. 1, depicting operation thereof and a flow of refrigerant during normal heating.
Fig. 3 is a piping diagram of the air conditioner of Fig. 1, depicting the operation thereof and a flow of refrigerant during defrosting/heating.
Fig. 4 is a perspective view of the heat storage device according to the present invention with a compressor and an accumulator installed.
Fig. 5 is a schematic cross-sectional view of the heat storage device according to the present invention.
Fig. 6 is a graph indicating a heat-transfer performance (heat transmission coefficient) and an amount of heat that can be stored for 40 minutes.
Fig. 7 is a graph indicating a relationship between Asker C hardness and Young's modulus.
Fig. 8 is a graph indicating Asker C hardness of a contact member and required pressing forces.
Fig. 9 is a schematic cross-sectional view of a conventional heat storage device.

### Embodiment(s) for Carrying out the Invention

The present invention is directed to a heat storage device disposed around a compressor to store heat generated by the compressor. The heat storage device includes a heat storage material for storing heat generated by the compressor and a heat storage tank for accommodating the heat storage material therein. A contact member having a hardness of 50 degrees or less in Asker C hardness is interposed between the compressor and a heat-transfer portion of the heat storage tank in contact with the compressor.

By this construction, the contact member is deformed by a pressing force applied to fix the heat storage tank to reduce a small gap between the compressor and the heat storage tank, thereby making it possible to sufficiently increase an area of contact. Accordingly, an air layer acting as a heat insulating material can be reduced and heat generated by the compressor can be efficiently transferred to and stored in the heat storage material.

Preferably, the contact member has a thermal conductivity of 0.43 W/mK or more in a state where the contact member is neither compressed nor deformed.

Again preferably, the contact member has a thickness of from 1 to 5 mm in a state where the contact member is neither compressed nor deformed.

Preferably, the contact member has an area of from 150 to 600 cm².

An embodiment of the present invention is explained hereinafter with reference to the drawings, but the present invention is not limited to the embodiment.

### (Embodiment 1)

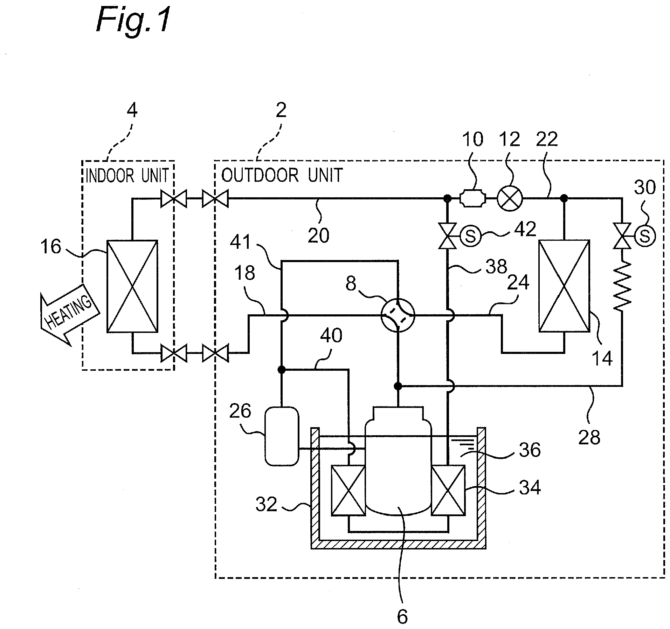

Fig. 1 depicts a piping diagram of an air conditioner having a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, and the like are electrically connected to and controlled by a controller (for example, a microcomputer not shown).

A relation of connection and functioning of the component parts of the above-described refrigeration cycle equipment are explained hereinafter with a flow of the refrigerant, taking the case of the heating operation.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

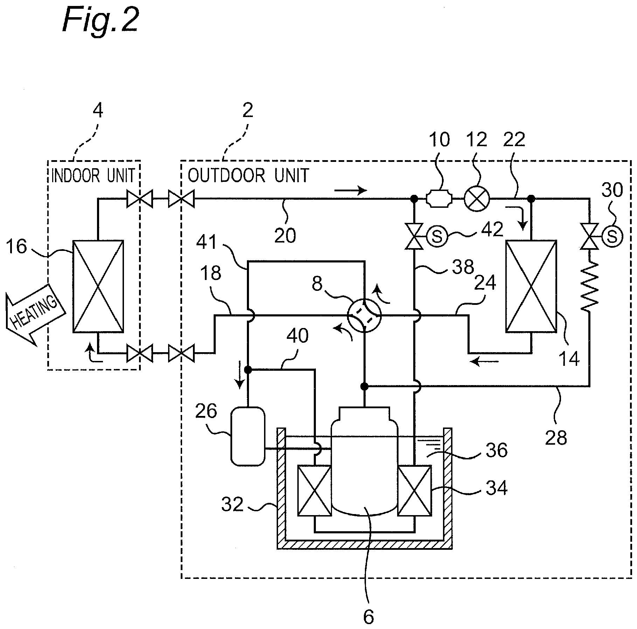

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

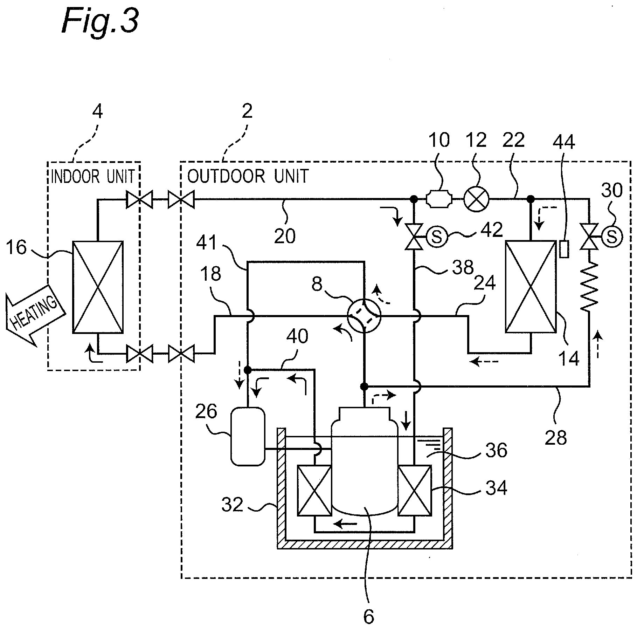

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with an evaporating temperature when no frost is formed, the controller outputs a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to open them. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26. A location where the gaseous refrigerant joins may be between the accumulator 26 and the compressor 6. In this case, the refrigerant can be avoided from being absorbed by the accumulator 26 having a given thermal capacity.

Although the refrigerant returning to the accumulator 26 contains a liquid refrigerant returning from the outdoor heat exchanger 14, the latter is admixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the initiation of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the temperature sensor 44 detects such a temperature rise of the outdoor heat exchanger 14, a determination is made that defrosting has been completed and the controller outputs a command to shift the defrosting/heating operation to the normal heating operation.

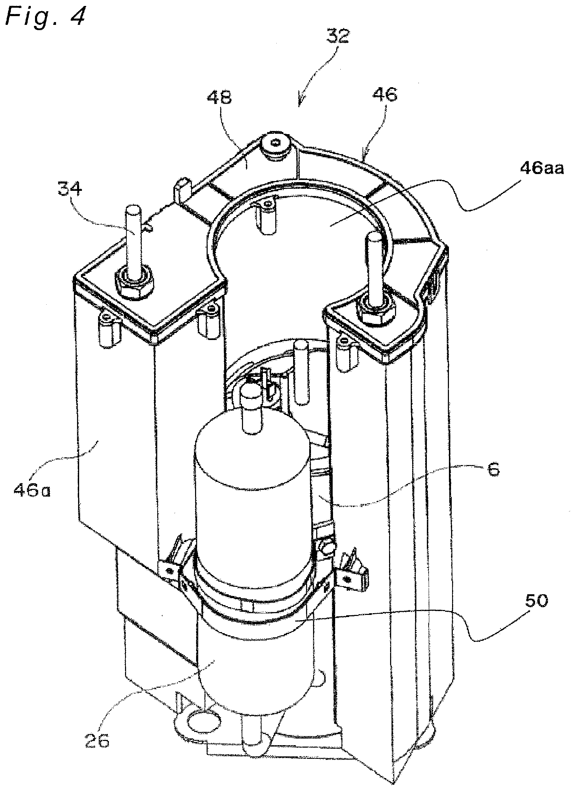

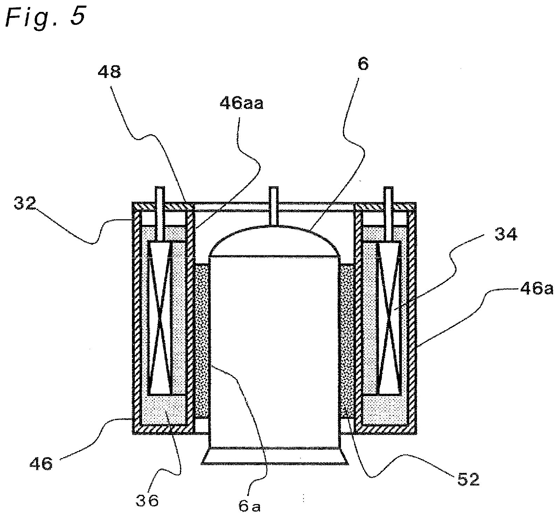

Figs. 4 and 5 depict the heat storage device, which includes the heat storage tank 32, the heat storage heat exchanger 34 and the heat storage material 36, as described above. Fig. 4 relatively realistically depicts a state where the heat storage device has been pressed against and fitted to the compressor 6 and the accumulator 26, which has been mounted to the compressor 6, using a belt 50. Fig. 5 is a schematic cross-sectional view depicting a relationship among component parts of the heat storage device and, in particular, those associated with the present invention (accumulator is not shown). It is to be noted that Figs. 1 to 3 referred to above are depicted to explain a flow of refrigerant and Figs. 4 and 5 are more correct than them when it comes to a positional relationship of the heat storage device around the compressor.

As shown in Fig. 5, the heat storage tank 32 has a side wall 46a and a bottom wall and also has an upwardly open tank body 46 made of a resin and a lid 48 made of a resin for closing an upper opening of the tank body 46. The lid 48 is screwed to the tank body 46. Part of the side wall 46a of the tank body 46 (i.e., part of the side wall 46a confronting the compressor 6) is a heat-transfer side wall 46aa that particularly contributes to heat transfer from a body shell 6a of the compressor 6 constituting an outer surface of the compressor 6. A contact member 52 is sandwiched between the body shell 6a and the heat-transfer side wall 46aa.

The contact member 52 is made of a material such as, for example, very flexible silicone gel or silicone rubber having a hardness of 5 degrees in Asker C hardness. Outside of metals, such a material has a relatively high thermal conductivity (1-15 W/mK). The heat storage tank 32 is pressed against the contact member 52 applied to the surface of the body shell 6a using the belt 50 shown in Fig. 4. A pressing force of the belt 50 causes the contact member 52 to be at least partially compressed and deformed, thereby maintaining the contact between the contact member 52 and the heat-transfer side wall 46aa.

The heat storage heat exchanger 34 is made of, for example, a copper pipe bent into a serpentine configuration (detailed shape is not shown) and accommodated within the tank body 46. The heat storage heat exchanger 34 has opposite ends extending upwardly from the lid 48. One end of the heat storage heat exchanger 34 is connected to the sixth refrigerant pipe 38 (see Fig. 1) and the other end of the heat storage heat exchanger 34 is connected to the seventh refrigerant pipe 40 (see Fig. 1). The heat storage material 36 is filled in an internal space of the tank body 36, which is encircled by the side wall 46a, the bottom wall and the heat-transfer side wall 46aa to accommodate the heat storage heat exchanger 34.

Operation of the heat storage device of the above-described construction is explained hereinafter.

In the following explanation, in order to easily understand a range of values within which the specification of the contact member as employed in the heat storage device according to the present invention should actually fall, specific and typical values are used, but effects similar to those as set forth in the following explanation can be naturally produced even if there are some differences in values in a heat storage device like the device according to the present invention.

### <Heat-transfer performance required >

How much heat the heat storage device according to the present invention should store is explained first. An amount of heat stored in the heat storage device according to the present invention is used to replenish a deficient amount of heat in conducting a heating operation during defrosting.

The level of the heating performance during defrosting can be considered as follows.

It is conceivable that an air conditioner provided with a heat storage device like the device according to the present invention is mostly used in a room ranging from about 6 to 23 mats (about 10-38 m²) in an ordinary house. According to the energy-saving standard in 1999, the thermal insulation performance in warm regions of Japan is 2.7 W/m²K in terms of coefficient of heat loss and, accordingly, if a room of 38 m² is maintained at 20°C, for example, when the ambient temperature is 2°C in winter, a season for frost to be formed, a heating capacity of 38x2.7x(20-2)=about 1850W is required. (Although the outdoor temperature is low in Europe and the United States and in cold regions, the thermal insulation performance of houses is correspondingly high and, hence, the heating capacity required in such countries or regions differs little from the aforementioned value. Even if the heat insulation performance of actual houses varies widely, the aforementioned value can be considered as a generally proper design value).

The heat storage device according to the present invention is a heat source for heating a room even during defrosting. In the defrosting operation of an ordinary air conditioner, the heating performance is zero and an input to the compressor 6, which is a heat supply source during defrosting, is all used to generate heat required for defrosting (and a temperature increase of the outdoor heat exchanger associated with the defrosting). Accordingly, in the case where a separate heat source such as heat storage as in the present invention exists, even if heat so stored is all used for heating, the defrosting performance does not reduce.

In general, because the defrosting operation takes only about five minutes, an amount of heat of 5x60x1850=555 kJ is required to maintain the above-described heating capacity of about 1850 W.

How heat should be transferred from the compressor to the heat storage material in order to ensure the above-described heat storage capacity is explained hereinafter.

To briefly explain as to how frost formation progresses during the heating operation of the air conditioner, when a surface temperature of the outdoor heat exchanger is below a dew-point temperature of outdoor air and below the freezing point, conditions are right for frost formation. When frost formation begins under such conditions, the heat exchanger is gradually covered with frost and an airflow resistance of the heat exchanger increases, thus resulting in a reduction in heating capacity of the air conditioner and a reduction in temperature of the heat exchanger. However, unless an amount of frost increases considerably, it remains to be seen whether the defrosting operation becomes necessary due to a considerable reduction in heating capacity and a considerable reduction in temperature of the heat exchanger and whether the defrosting operation should be initiated due to a temperature change of the heat exchanger. In most cases, the heating capacity changes only slightly after a lapse of about 40±10 minutes and, hence, the heating operation can be continued.

That is, the aforementioned amount of heat of 555 kJ must be transferred from the compressor 6 and stored in the heat storage material 36 in the heat storage tank 32 within about 40 minutes.

In the air conditioner having the heat storage device according to the present invention of the construction shown in Fig. 4, the body shell 6a of the compressor 6 has a diameter of 120 mm and a height of 200 mm that is involved in heat transfer through the contact member. This is a quite common size. In this embodiment, because the portion involved in heat transfer accounts for three quarters of the entire circumference of the compressor, the area of the portion involved in heat transfer is 120xπ x200x3/4x1/100 = about 565 cm².

Although the body shell is generally manufactured such that a steel plate of a thickness of about 2 mm is formed into a round shape and a joint thereof is subsequently welded, there is normally a difference of about 1-2 mm in dimension between a completed body shell and a true circle in some locations. There is also a difference in dimension between the heat-transfer side wall 46aa of the heat storage tank and the true circle, and the former also deforms when tightened by the belt 50 for fixation thereof. For this reason, a gap between the body shell 6a and the heat-transfer side wall 46aa of the heat storage tank does not become constant and, in fixing them, even if they are brought into contact with each other at closest points thereof in the absence of the contact member, they are still separated from each other at other locations with a gap of about 0-2 mm left therebetween. If two solid substances are not in contact with each other, as in the example given above, and heat is transferred from one of them to the other via air, an amount of heat transfer is extremely small.

In the case where the gap is filled with the contact member 52, the contact member 52 deforms to increase an area of a contact portion that acts as a heat-transfer area.

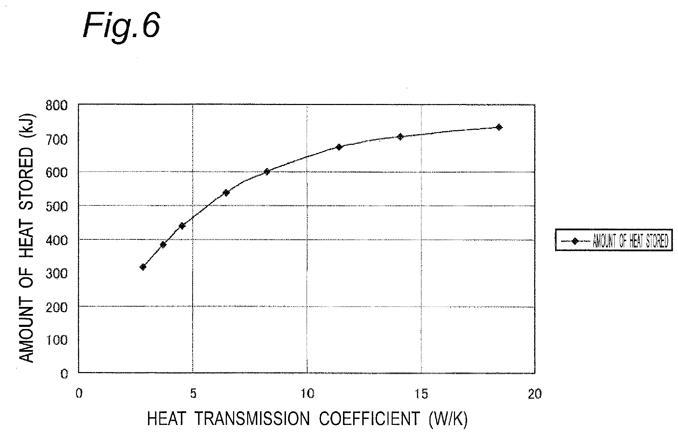

Fig. 6 is a graph indicating a heat transmission coefficient from the compressor 6 to the heat storage material 36 and an amount of heat that can be stored for 40 minutes in a typical example in which the temperature of the compressor 6 during heating is 70°C and the initial temperature of the heat storage material 36 is 10°C. In this embodiment, a 25% ethylene glycol aqueous solution was used as the heat storage material, the volume of which was 3 liters, and the area of heat transfer was 565 m² as discussed above. This graph reveals that a heat transmission coefficient of about 6.9 W/K is required to store an amount of heat of 555 kJ under the above-described conditions. It is to be noted that the heat transmission coefficient is generally defined as a value per an area of passage, but a value obtained by multiplying the area of passage was used here for the sake of convenience.

### <Hardness required>

The process of deformation and subsequent contact of the contact member 52 is explained hereinafter.

A commercially available product used as the contact member 52 of this kind is generally called a heat-transfer sheet, which is frequently used to enhance the cooling performance of an electronic component part and made of, for example, rubber or silicone gel. However, such an example is generally a cube several centimeters on a side, which does not most often require a large pressing force as described below even if the hardness is not strictly investigated unlike the present invention.

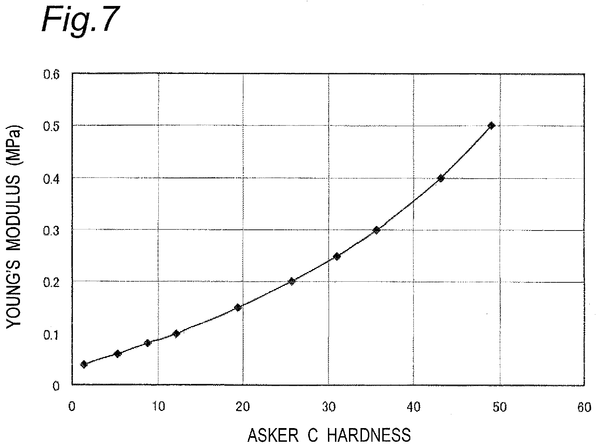

Asker C hardness is often used as an index indicating the hardness of a material of this kind and hardness values thereof are known as having a strong relationship with Young's modulus. Fig. 7 is a graph indicating a relationship between Asker C hardness of the contact member 52 used in this embodiment and Young's modulus.

According to this graph, the contact member 52 used in this embodiment has a hardness of 5 degrees in Asker C hardness, which corresponds to a Young's modulus of about 0.06 MPa. It should be appreciated that Asker C hardness and Young's modulus are originally different indexes and, accordingly, do not correctly correspond one-to-one with each other, but the following explanation is made based on Young's modulus because Young's modulus is convenient in calculation.

In a typical example, if a variation in the gap between the body shell 6a and the heat-transfer side wall 46aa of the heat storage tank is 2 mm, a contact member having a thickness of 3 mm is used because the thickness of the contact member must be greater than the variation. Under such conditions, if the contact member is completely held in close contact with the heat storage tank and deformation of the contact member is smallest, the thickness thereof ranges from 1 mm to 3 mm.

As described above, if Young's modulus is 0.06 MPa and the average thickness of the contact member 52 after deformation is 2 mm, a strain is (3-2)/3=33% and a stress is 0.06 MPa x0.33=20000 Pa and, hence, a pressing force of 20000 Pa x565 cm²=115 kgf is required to cause such deformation.

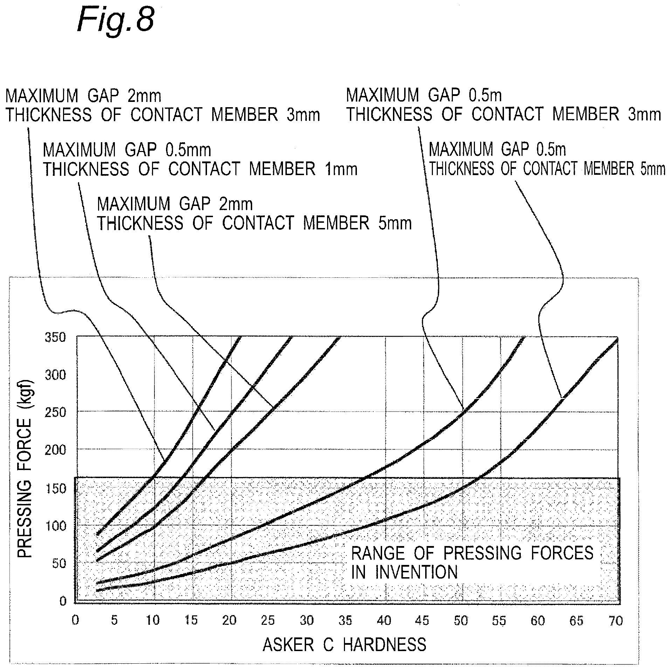

The above-described case is a typical one and in the construction of the present invention, the variation in the gap between the body shell 6a and the heat-transfer side wall 46aa of the heat storage tank is generally in the range of 0.5-2 mm and the thickness of the contact member is generally in the range of 1-5 mm. A relationship between Asker C hardness and the pressing forces in such cases is graphically depicted in Fig. 8.

Because the pressing force of the belt 50 as employed in this embodiment is usually about 50 kgf and a maximum of three belts are used, it is conceivable that about 150 kgf is an upper limit. This upper limit is considered practicable in view of the strength of the heat storage tank. If the size of the gap and the thickness of the sheet have respective proper values as described above and as shown in Fig. 8 and if the pressing force is 150 kgf or less, Asker C hardness must be about 50 degrees or less.

When it comes to a lower limit of the hardness, the softer the material is, the better for the above-described reason, but the material is usually almost in the form of a liquid below a hardness of 1 degree. Such a material is difficult to assemble and accordingly impracticable.

As to the thickness, the thicker the material is, the better in view of the pressing force, but a thicker material naturally has a reduced heat-transfer performance. In addition, because the upper limit of the gap variation is about 2 mm, a thickness of about 5 mm is considered as an upper limit from the practical point of view.

That is, it is conceivable that unless the hardness of the contact member is about 50 degrees or less, it is practically difficult for the contact member to deform over a wide area and to ensure a wide heat-transfer area.

### <Thermal conductivity required>

Not only must the contact member 52 have a wide heat-transfer area, as described above, but the heat transmission coefficient must also be about 6.9 K/W. Heat is transferred from the surface of the body shell 6a eventually to the heat storage material 36 through the contact member 52 and the heat-transfer side wall 46aa of the heat storage tank 32. Also, heat transfer in this case depends on the thermal conductivity of the heat storage material 36. In this embodiment, because the thermal conductivity of the heat storage material 36 is about 800 W/m²K, the heat transmission coefficient of the contact member 52 and the heat-transfer side wall 46aa of the heat storage tank 32 is 1/(1/6.9-1/(800x565/10000)=about 8.14 W/K.

Assuming an ideal condition in which the heat-transfer side wall 46aa of the heat storage tank 32 has no thermal resistance, because the heat transmission coefficient of the contact member 52 is 8.14 W/K, the contact member 52 of a thickness of 3 mm must have a thermal conductivity of 8.14x(3/1000)/(565/10000)=0.43 W/mK or more. This state corresponds to a case where the side wall of the heat storage tank 32 is made of a metal having a high thermal conductivity.

If the heat-transfer side wall 46aa of the heat storage tank 32 is made of a synthetic resin having a large thermal resistance and a thickness of 2 mm, because synthetic reins generally have a thermal conductivity of about 0.3 W/mK, the heat transmission coefficient of the contact member 52 is 1/(1/8.14-1/(0.3x(565/10000)/(2/1000)))=206 W/K. In this case, the contact member 52 of a thickness of 3 mm must have a thermal conductivity of 206x(3/1000)/(565/10000)=10.9 W/mK or more. As a matter of course, a higher thermal conductivity is required with an increase in thickness of the synthetic resin.

Although the above explanation has been made taking an example of a heat-transfer area (area of the contact member) of 565 cm² with respect to a room of 38 m², a heat-transfer area of about 150 cm² only has to be considered with respect to a room of 10 m² and the present invention is also applicable to this case without any change.

Further, although the heat-transfer side wall of the heat storage tank has been described as being pressed against the compressor using the belt, the belt may be replaced with any other method having similar effects such as, for example, thread fastening.

Also, not to mention the thickness or the thermal conductivity of the contact member 52, other values associated with the contact member 52 vary upon compression and subsequent deformation thereof, but unless otherwise specifically noted in this description, both the thickness and the thermal conductivity represent respective values in an uncompressed state.

From the foregoing, in the construction of the present invention, the contact member 52 is required to have a softness that is about the same as 50 degrees or less in Asker C hardness and, at the same time, the contact member 52 is required to have a high thermal conductivity of 0.43 W/mK or more.

### Industrial Applicability

Because the heat storage device according to the present invention is provided with a flexible contact member having a hardness of 50 degrees or less in Asker C hardness and can efficiently store heat generated by a compressor in a heat storage material, the heat storage device according to the present invention is effectively applicable to air conditioners, refrigerators, water heaters, heat pump washing machines, and the like.

### Explanation of reference numerals

2 outdoor unit, 4 indoor unit, 6 compressor,
6a body shell, 8 four-way valve, 10 strainer, 12 expansion valve,
14 outdoor heat exchanger, 16 indoor heat exchanger,
18 first refrigerant pipe, 20 second refrigerant pipe,
22 third refrigerant pipe, 24 fourth refrigerant pipe, 26 accumulator,
28 fifth refrigerant pipe, 30 first solenoid valve, 32 heat storage tank,
34 heat storage heat exchanger, 36 heat storage material,
38 sixth refrigerant pipe, 40 seventh refrigerant pipe,
42 second solenoid valve, 44 temperature sensor,
46 heat storage tank body, 46a side wall, 46aa heat-transfer side wall,
48 lid, 50 belt, 52 contact member.

## Claims

1. A heat storage device adapted for being disposed around a compressor (6) to store heat generated by the compressor (6), the heat storage device comprising:
a heat storage material (36) that is adapted to store heat generated by the compressor (6);
a heat storage tank (32) that accommodates the heat storage material (36) therein, the heat storage tank (32) having an upper opening being closed by a lid (48), a side wall (46a) and a heat-transfer portion (46aa) formed by a part of the side wall (46a) which confronts the compressor (6) when the heat storage tank (32) is disposed around the compressor (6);
a heat storage heat exchanger (34) embedded in the heat storage material (36) accommodated in the heat storage tank (32) wherein
opposite ends of the heat storage heat exchanger (34) extend upwardly from the lid (48);
a contact member (52) placed on the heat-transfer portion (46aa) of the heat storage tank (32), the contact member (52) being adapted for being interposed between the heat-transfer portion (46aa) and the compressor (6), the contact member (52) having a hardness of 50 degrees or less in Asker C hardness; and
a belt (50), wherein
the heat storage tank (32) is adapted for being pressed against the compressor (6) to be brought into close contact therewith and secured thereto by the belt (50) with the contact member (52) acting as a cushioning material, and wherein
an upper end of the heat storage heat exchanger (34) is located higher than an upper end of the contact member (52).

2. The heat storage device according to claim 1, wherein the contact member (52) has a thermal conductivity of 0.43 W/mK or more in a state where the contact member (52) is neither compressed nor deformed.

3. The heat storage device according to claim 1 or 2, wherein the contact member (52) has a thickness of from 1 to 5 mm in a state where the contact member (52) is neither compressed nor deformed.

4. The heat storage device according to any one of claims 1 to 3, wherein the contact member (52) has an area of from 150 to 600 cm².

5. An air conditioner comprising a compressor (6) and a heat storage device according to any one of claims 1 to 4 disposed around the compressor (6).

## Patentansprüche

1. Wärmespeichervorrichtung, die dazu ausgelegt ist, um einen Kompressor (6) herum angeordnet zu sein, um vom Kompressor (6) erzeugte Wärme zu speichern, wobei die Wärmespeichervorrichtung enthält:
ein Wärmespeichermaterial (36), das dazu ausgelegt ist, die von einem Kompressor (6) erzeugte Wärme zu speichern;
einen Wärmespeicherbehälter (32), der darin das Wärmespeichermaterial (36) aufnimmt, wobei der Wärmespeicherbehälter (32) eine obere, durch einen Deckel (48) verschlossene Öffnung, eine Seitenwand (46a) und einen Wärmeaustauschabschnitt (46aa), der durch einen Teil der Seitenwand (46a) gebildet wird, welcher dem Kompressor (6) gegenübersteht, wenn der Wärmespeicherbehälter (32) um den Kompressor (6) herum angeordnet ist, aufweist;
einen Wärmespeicher-Wärmetauscher (34), der in das Wärmespeichermaterial (36) eingebettet ist, welches in dem Wärmespeichertank (32) aufgenommen ist, wobei
die gegenüberliegenden Enden des Wärmespeicher-Wärmetauschers (34) sich aufwärts von dem Deckel (48) erstrecken;
ein Kontaktelement (52), das auf dem Wärmeaustauschabschnitt (46aa) des Wärmespeicherbehälters (32) angeordnet ist, wobei das Kontaktelement (52) dazu ausgelegt ist, zwischen dem Wärmeaustauschabschnitt (46aa) und dem Kompressor (6) eingefügt zu werden, wobei das Kontaktelement (52) eine Härte nach Asker C von 50 Grad oder weniger aufweist; und
einen Gurt, wobei
der Wärmespeicherbehälter (32) dazu ausgelegt ist, gegen den Kompressor (6) gedrückt zu werden, um in engen Kontakt damit gebracht zu werden und daran durch den Gurt (50) mit dem Kontaktelement (52), das als Dämpfmaterial wirkt, gesichert zu werden, und wobei
ein oberes Ende des Wärmespeicher-Wärmetauschers (34) höher als ein oberes Ende des Kontaktelements (52) angeordnet ist.

2. Wärmespeichervorrichtung nach Anspruch 1, wobei das Kontaktelement (52) in einem Zustand, in welchem das Kontaktelement (52) weder komprimiert noch deformiert ist, eine Wärmeleitfähigkeit von 0,43 W/mK oder mehr aufweist.

3. Wärmespeichervorrichtung nach einem der Ansprüche 1 oder 2, wobei das Kontaktelement (52) in einem Zustand, in welchem das Kontaktelement (52) weder komprimiert noch deformiert ist, eine Dicke von 1 bis 5 mm aufweist.

4. Wärmespeichervorrichtung nach einem der Ansprüche 1 bis 3, wobei das Kontaktelement (52) eine Fläche von 150 bis 600 cm² aufweist.

5. Klimagerät, das einen Kompressor (6) und eine Wärmespeichervorrichtung nach einem der Ansprüche 1 bis 4, die um den Kompressor herum angeordnet ist, enthält.

## Revendications

1. Dispositif de stockage de chaleur conçu pour être disposé autour d'un compresseur pour stocker la chaleur générée par le compresseur (6), le dispositif de stockage de chaleur comprenant :
un matériau de stockage de chaleur (36) qui est conçu pour stocker la chaleur générée par le compresseur (6) ;
un réservoir de stockage de chaleur (32) qui reçoit le matériau de stockage de chaleur (36) à l'intérieur de celui-ci, le réservoir de stockage de chaleur (32) ayant une ouverture supérieure fermée par un couvercle (48), une paroi latérale (46a) et une partie de transfert de chaleur (46aa) formée par une partie de la paroi latérale (46a) qui fait face au compresseur (6) lorsque le réservoir de stockage de chaleur (32) est disposé autour du compresseur (6) ;
un échangeur de chaleur à stockage de chaleur (34) intégré dans le matériau de stockage de chaleur (36) logé dans le réservoir de stockage de chaleur (32), dans lequel
des extrémités opposées de l'échangeur de chaleur à stockage de chaleur (34) s'étendent vers le haut à partir du couvercle (48) ;
un élément de contact (52) placé sur la partie de transfert de chaleur (46aa) du réservoir de stockage de chaleur (32), l'élément de contact (52) étant conçu pour être interposé entre la partie de transfert de chaleur (46aa) et le compresseur (6), l'élément de contact (52) ayant une dureté de 50 degrés ou moins en dureté Asker C ; et
une courroie (50), dans lequel
le réservoir de stockage de chaleur (32) est conçu pour être pressé contre le compresseur (6) destiné à être mis en contact étroit avec celui-ci et fixé à celui-ci par la courroie (50) avec l'élément de contact (52) servant de matériau d'amortissement, et dans lequel
une extrémité supérieure de l'échangeur de chaleur à stockage de chaleur (34) est située plus haut qu'une extrémité supérieure de l'élément de contact (52).

2. Dispositif de stockage de chaleur selon la revendication 1, dans lequel l'élément de contact (52) a une conductivité thermique de 0,43 W/mK ou plus dans un état dans lequel l'élément de contact (52) n'est ni comprimé ni déformé.

3. Dispositif de stockage de chaleur selon la revendication 1 ou 2, dans lequel l'élément de contact (52) a une épaisseur de 1 à 5 mm dans un état dans lequel l'élément de contact (52) n'est ni comprimé ni déformé.

4. Dispositif de stockage de chaleur selon l'une quelconque des revendications 1 à 3, dans lequel l'élément de contact (52) a une surface de 150 à 600 cm².

5. Climatiseur comprenant un compresseur (6) et un dispositif de stockage de chaleur selon l'une quelconque des revendications 1 à 4 disposé autour du compresseur (6).
